Europäisches Patentamt

European Patent Office

Office européen des brevets

(11) Publication number: **0 031 382**
**B1**

## EUROPEAN PATENT SPECIFICATION

(45) Date of publication of patent specification: **15.08.84**

(51) Int. Cl.³: **B 62 B 13/00**

(21) Application number: **79900108.6**

(22) Date of filing: **05.01.79**

(86) International application number:
**PCT/JP79/00002**

(87) International publication number:
**WO 80/01371 10.07.80 Gazette 80/15**

(54) SNOW SLIDING BOARD.

(43) Date of publication of application:
**08.07.81 Bulletin 81/27**

(45) Publication of the grant of the patent:
**15.08.84 Bulletin 84/33**

(84) Designated Contracting States:
**CH DE FR GB**

(56) References cited:
DE - A - 2 836 366
FR - A - 2 383 679
FR - A - 2 427 832
FR - A - 2 435 956
JP - A - 51 066 044
JP - B - 37 001 320
JP - U - 49 105 275
JP - U - 51 129 373
US - A - 3 332 697
US - A - 3 343 847
US - A - 3 378 275
US - A - 3 401 949

(73) Proprietor: KAWAHARA, Kuniaki
5-8, Sakuragoaka, 4-chome
Setagaya-ku Tokyo 156 (JP)

(72) Inventor: KAWAHARA, Kuniaki
5-8, Sakuragoaka, 4-chome
Setagaya-ku Tokyo 156 (JP)

(74) Representative: Baillie, Iain Cameron et al,
c/o Langner Parry Isartorplatz 5
D-8000 München 2 (DE)

Courier Press, Leamington Spa, England.

## Description

This invention related to a board which freely slides on the snow, and more particularly to a board for sliding on snow comprising a board body which includes a nose, intermediate, and tail portions, said tail portion being shaped with a double-pin tail configuration, or "swallows tail".

In order to slide efficiently on the surface of the snow, it is required that the player's weight be uniformly distributed over the surface of the resilient board which is contacted by the snow. For the same reason, a ski includes nose-bends and tail-bends which will contact a flat floor when the ski is placed thereon, the intermediate ski portion between the nose-bend and tail-bend being curved upwardly from the floor to form an arched bend. The nose-bends and tail-bends of the ski are smaller in thickness than the intermediate arched portion. When the weight of a skier is placed on the intermediate portion of the ski, the thin walls of the ski are bent to contact the whole bottom with the surface of the snow so that the skier's weight is uniformly distributed over the entire ski.

It is known from JP—A—51-129373 to provide a board for sliding on snow having a board body with a nose intermediate and tail portions, the tail portion being shaped in a double-pin configuration. All portions are however of substantially uniform thickness.

It is known from JP—A—37-1320 to embed a spring member longitudinally in the body of a ski to increase the resilience of the ski.

According to the present invention, however, there is provided a board for sliding on snow, comprising a board body which includes nose, intermediate and tail portions, said tail portion being shaped into a double-pin tail configuration characterized in that each of said nose and tail portions have such a thickness that it will be elastically bent by the user's weight, said board body being shaped into an inverted arch bend and provided with side plates which are mounted on both the side edges of said board body and extending upwardly and longitudinally thereof, the respective connections between said nose and intermediate portions and between said intermediate and tail portions including step-decks located thereon for the user's stance which are inclined downwardly toward said intermediate portion.

The objects, features, and advantages will become more apparent from the embodiment of the invention illustrated in the accompanying drawings.

Brief Description of the Drawings

Figure 1 is a plan view showing a basic structure of a board for sliding on snow which is constructed in accordance with this invention;

Figure 2 is a side view of the board shown in Figure 1;

Figure 3 is a bottom view of the board shown in Figure 1;

Figure 4 is a sectional view taken along a line IV—IV of Figure 1;

Figure 5 is a sectional view taken along a line V—V of Figure 1;

Figure 6 is a perspective view showing a metal fitting for reinforcing the side plate of the board;

Figure 7 is a plan view of a board constructed according to this invention, in which spring means are located within the board to increase the resiliency in the intermediate portion of the board;

Figure 8 is an enlarged, sectional view taken along a line VIII—VIII of Figure 7;

Figure 9 is a plan view of a board constructed according to this invention which includes a pair of bindings located thereon;

Figure 10 is a perspective view showing, in an enlarged scale, one of the bindings shown in Figure 9; and

Figure 11 is an enlarged, sectional view taken along a line XI—XI of Figure 9.

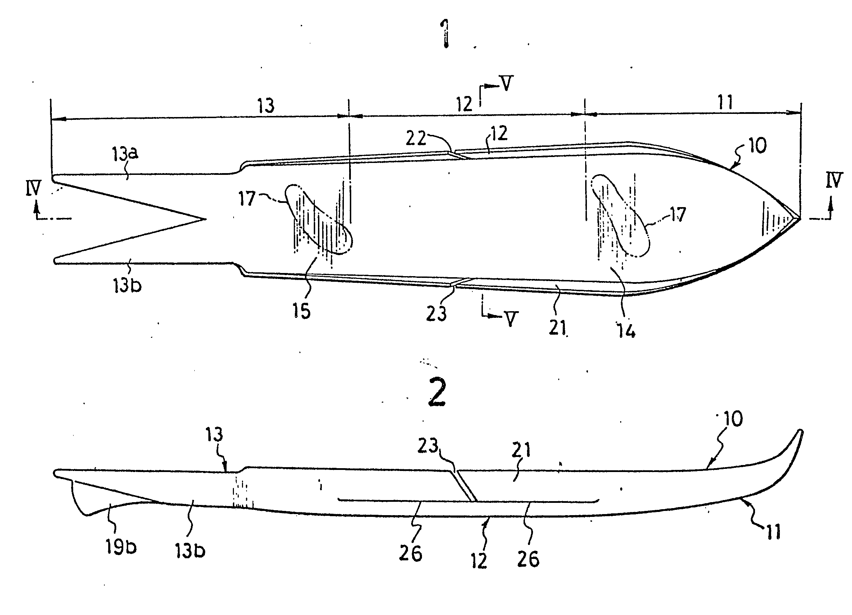

Figure 1 shows the basic structure of a board for sliding on snow, invention. Such a basic structure comprises a board body (10) made of wood, FRP or the like which generally includes a nose portion (11), an intermediate portion (12) and a tail portion (13). The overall length of the board body (10) is about 150 cm, but it is not limited to such a length. The length of the board is determined by the height and weight of the user or by the required speed of sliding. The nose and tail portions (11), (13) are of such a thickness that they will not be easily deformed as the user's weight is exerted on the board, for example, about 4 cm thick. On the other hand, the intermediate portion (12) is of a thickness sufficiently smaller than that of the nose or tail portion to bend easily, for example, about 0.6 cm to 1.5 cm. The connection between the intermediate and nose portions (12), (11) includes a step-deck (14) formed to incline upwardly toward the nose portion (11), and the connection between the intermediate and tail portions (12), (13) also includes a step-deck (15) formed to incline upwardly toward the tail portion (13).

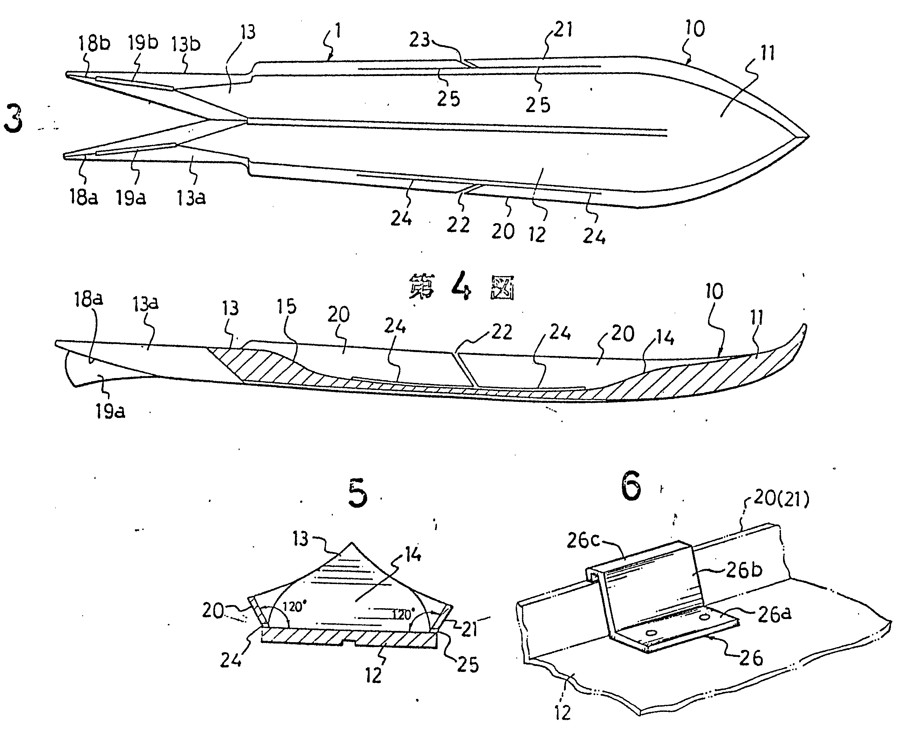

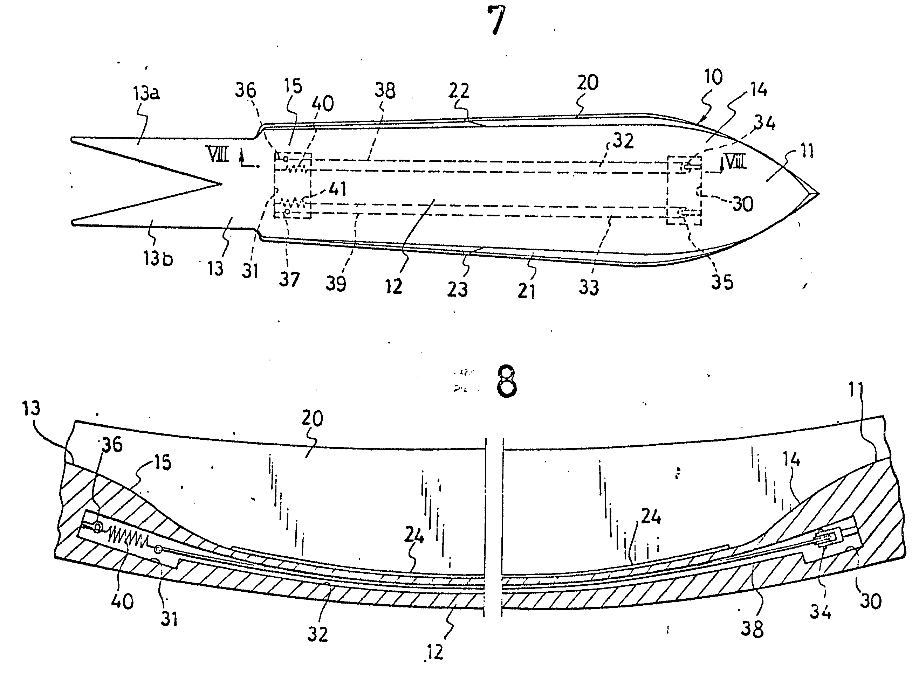

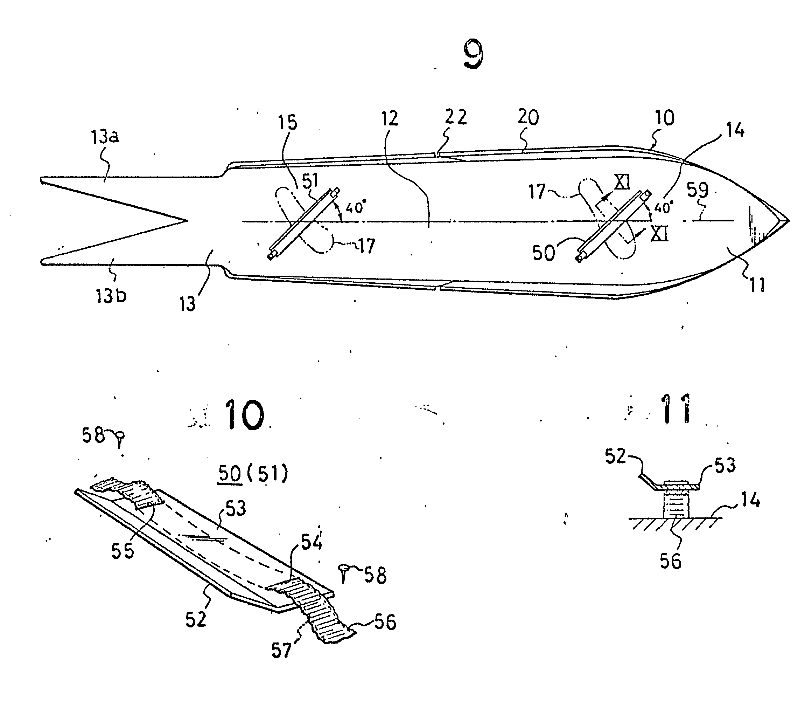

The board body (10) includes a flat bottom (16) adapted to contact the surface of snow, as shown in Figures 3 and 5, and is of an inverted arch shape as shown in Figures 2 and 4 contrary to conventional skis. Namely, it is curved toward the surface of snow downwardly, as shown in Figure 4.

When the weight of a user is placed on the board body (10) by positioning his left and right feet (17) on the respective step-decks (14) and (15) as shown by chain lines in Figure 1, the resilient, thin intermediate portion (12) is bent into a flat plate with the bottom contacted uniformly by the surface of snow so that the user's weight will be equally distributed over the board body (10). Such an adjustment also permits the board to efficiently slide on the snow just like conventional skis.

When the board is slid on the snow by the user, the curvature thereof is varied in accordance with the irregularity of the snow surface. At this time, the user's legs should be placed on the inclined step-decks (14) and (15) so that the board can be controlled to follow the irregularity of the snow. Further, the speed of the sliding board changes in accordance with the irregularity of the snow surface, the properties of the snow or the like. When the speed of the sliding board decreases abruptly, the user can support himself by placing his foot on the forward step-deck (14) countering the inertia force. When the speed increases suddenly, the user can similarly support himself by placing his foot on the rearward step-deck (15) against the inertia force. This can be easily accomplished by the user due to the fact that the board body (10) includes both forward and rearward inclined step-decks (14) and (15) as shown in Figure 4.

The nose portion (11) of the board body (10) includes a pointed tip curved upwardly as in conventional skis, The tail portion (13) includes two pin-tails (13a) and (13b) as seen from Figures 1 and 3, and is generally called a "swallow's tail". Each of the pin-tails (13a) and (13b) in a cross-sectional view form an inverted triangle, the bottom edge of which (18a) or (18b) includes a fin (19a) or (19b). Thus, the nose portion (11) of the board can be easily moved upwardly when the user's weight is shifted to the tail portion (13). At the same time, the pin-tails (13a) and (13b) are pressed against the surface of the snow so that the yawing of the sliding board can be decreased stabilizing the board on the snow. Moreover, the fins (19a) and (19b) serve as a steering means since they penetrate into the snow.

The board body (10) also includes, as shown in Figure 1, side plates (20) and (21) mounted on the side edge of the board body (10) and extending longitudinally along the nose portion (11), the intermediate portion (12) and a part of the tail portion (13). Each of the side plates (20) and (21) has a height of about 4 cm as measured at the intermediate portion (12) and is outwardly inclined with respect to the upper face of the intermediate portion (12) at an angle of about 120 degrees, as seen from Figure 5. If the user's weight is laterally shifted by placing one of his feet on either the right or left side plate, the board body (10) can be heeled while sliding. In an extreme case, the board can be slid on only one of the side plates (20) and (21). This allows the user to turn the board to the desired direction.

Each of the side plates (20) and (21) includes a slit (22) or (23) located at the middle of the intermediate portion (12) and slanting across the width of the corresponding side plate to the top edge thereof, as best seen from Figure 4. Each of the side plates also includes a longitudinal slit (24) or (25) extending from the bottom end of the slit (22) or (23) toward the nose and tail portion (11) and (13) along the side edge of the intermediate portion (12). These slits (22)—(25) permit the board body (10) to bend elastically at the intermediate portion (12) thereof.

As shown in Figure 6, metal reinforcing fittings (26) are mounted on the inside of the side plates (20) and (21) at the slits (22) and (23) and affixed to the board body (10) by any suitable fastening means. This is for the purpose of reinforcing the weakened structure of the board in the presence of the slits (22)—(25), preventing the side plates from jamming at the slits, and avoiding any undesirable bending of the board body (10). Each of the fittings (26) includes: a mount portion (26a) for securing the fittings to the intermediate portion (12) of the board, a reinforcing portion (26b) contacting the inner face of the side plate (20) or (21), and a channel portion (26c) engaged at the upper edge of the side plate.

In conventional skis and surf-boards, decreasing the weight increases the operability thereof so long as the strength will hold. This is because a lighter ski or surf-board can be more easily handled by a plater. It is now known in the art that the lightest surf-board has a weight of about 3 kg, and the lightest surf-board can float on water. For the same reason, it is desirable that this invention also provides lighter boards for sliding on snow. When the intermediate portion (12) of the board is thin-walled so far as the strength thereof permits, the resiliency is decreased adversely affecting the sliding performance. Figures 7 and 8 illustrate another embodiment of this invention which overcomes the above problem.

In Figures 7 and 8, board body (10) is substantially of the same configuration as that of the previous embodiment as shown in Figures 1 to 6 except that the intermediate portion (12) of the board is made as thin as possible thus decreasing the weight of the board. Therefore, the parts are indicated by using reference numerals similar to those of Figures 1 to 6. Only the structural parts which are different from those in the previous embodiment will not be described.

The board body (10) includes a nose portion (11) in which a cavity (30) is positioned immediately below the forward step-deck (14). The tail portion (13) also includes a cavity (31) positioned immediately below the rearward stepdeck (15). The intermediate portion (12) includes a pair of parallel passages (32) and (33) which connect said cavities (30) and (31). The cavity (30) includes two small pulleys (34) and (35) disposed at the ends of respective passages (32) and (33), while the cavity (31) includes two hooks (36) and (37) disposed similarly therein. Wire (38) or (39) is connected at one end to the respective hook (36) or (37) in one of the cavities and extends through the respective passage (32) or (33) to the other cavity (30) in which the wire (38) or (39) passes around the respective pulley (34) or (35) and then through the passage (32) or (33) to the cavity (31). The opposite end of the wire (38) or (39) is connected by means of coil spring (40) or (41) to the inside of cavity (31). In such an arrangement, the wires (38) and (39) are held in tension by the coil springs (40) and (41) so that the intermediate portion (12) of the board tends to be bent upwardly, that is, in the direction of the inverted arch bend. The coil springs (40) and (41) will resist the bending of the board in a direction opposite to the inverted arch bend. Thus, the resiliency in the intermediate portion (12) can be increased by the action of the coil springs (40) and (41). Moreover, the resiliency can be covered by the coil springs (40) and (41) even if it is decreased due to the effect of aging.

While a means to increase resiliency comprising the pair of springs and the pair of wires has been described in connection with Figures 7 and 8, it is to be understood that one or more sets of such combinations can be utilized in accordance with this invention.

Figure 9 shows still another embodiment of this invention in which two bindings (50) and (51) are mounted on the forward and rearward step-decks (14) and (15) of the board body (10). Each of the bindings (50) and (51) is disposed at an angle of about 40 degrees relative to a longitudinal center line (59) of the board body (10). The binding (50) or (51) comprises, as best seen from Figure 10, a shoe-holding plate (53) including a slant portion (52) formed at the forward edge thereof for facilitating insertion of the shoe and slots (54) and (55) formed in the shoe-holding plate (53) at the opposite end thereof. Inserted into slots (54) and (55) is a rubber tape (57) covered by a sleeve-like cloth (56), the opposite ends of which are anchored on the board body (10) by any suitable fastening means such as bolts (58) or the like. In this way, the bindings (50) and (51) can be mounted on the board body (10). As seen from Figure 11, the shoe-holding plate (53) is positioned above the surface of the board body (10) by a distance of about 3 cm. Thus, the show can be easily moved in and out of the space between the shoe-holding plate and the surface of the board. Since the bindings are positioned slantwise with respect to the longitudinal center line (59), the user's feet or shoes can be shifted relatively freely in all directions so that the user's body will be conveniently balanced on the board surface while sliding. It is further preferred that the sleeve-like cloth (56) is about 3 cm longer than the rubber tape (57). Therefore, the rubber tape (57) can be prevented from extending beyond the length of the sleeve-like cloth (56) so that the user's shoes will not slip out of the bindings upon jumping. It is also to be understood that when the right foot of the user is positioned on the forward step-deck (14) and the left foot is on the rearward step-deck (15), the bindings (50) and (51) will be oriented in a position shifted angularly through 90 degrees from a position shown in Figure 10.

**Claims**

1. A board for sliding on snow, comprising a board body (10) which includes nose, intermediate and tail portions (11, 12, 13), said tail portion being shaped into a double-pin tail configuration characterized in that each of said nose and tail portions (11, 13) have such a thickness that it will be elastically bent by the user's weight, said board body (10) being shaped into an inverted arch bend and provided with side plates (20, 21) which are mounted on both the side edges of said board body and extending upwardly and longitudinally thereof, the respective conections between said nose and intermediate portions (11, 12) and between said intermediate and tail portions (12, 13) including step-decks (14, 15) located thereon for the user's stance which are inclined downwardly toward said intermediate portion (12).

2. A board according to claim 1, characterized in that each pin-tail (13a, 13b) of said tail portion (13) is of a tapered trigonal pyramid configuration.

3. A board according to claim 2 wherein the bottom edge of each pin-tail (13a, 13b) includes a fin (19a, 19b) anchored thereto.

4. A board according to any preceding claim characterized in that sid side plates (20, 21) includes slit means (22, 23, 24, 25) formed therein to facilitate the free bending of said intermediate portion (12).

5. A board according to claim 4 characterized in that said slit means (22, 23, 24, 25) includes a slit (22, 23) formed in each of said side plates (20, 21) to extend slantwise from the top edge of that side plate (20, 21) to adjacent the bottom edge thereof and another slit (24, 25) similarly formed from the bottom end of said slit (22, 23) in the side plate to extend along the·corresponding side edge of said intermediate portion (12).

6. A board according to any preceding claim characterized in that said step-decks (14, 15) includes binding means (50, 51) mounted slantwise thereon.

7. A board according to claim 6 characterized in that said binding means (50, 51) comprise a shoe-holding plate (53) having slots (54, 55) ·made thereon, a rubber type (57) passing through said slots (54, 55) and having the opposite ends which are anchored to the corresponding step-deck (14, 15), and a sleeve-like cloth (56) covering said rubber tape (57) along the length thereof, said sleeve-like cloth (56) having a length greater than of said rubber tape (57).

8. A board according to any preceding claim characterized in that it further includes spring means for increasing the resiliency in said intermediate portion (12), said spring means being located within said board body (10) to extend from said nose portion (11) through said intermediate portion (12) to said tail portion (13), said spring means including a pulley (34, 35), a wire around said pulley (38, 39) and a coil spring (40, 41) for holding said wire (38, 39) in tension.

## Revendications

1. Planche à glisser sur de la neige, comprenant un corps de planche (10) qui comporte des parties avant, médiane et arrière (11, 12, 13), ladite partie arrière ayant la forme d'une configuration arrière à deux pointes caractérisée en ce que chacune desdites parties avant et arrière (11, 13) a une épaisseur telle qu'elle pliera élastiquement sous le poids de l'utilisateur, ledit corps de planche (10) ayant la forme d'une courbure en arc inversé et étant muni de plaques latérales (20, 21) qui sont montées sur les deux côtés latéraux dudit corps de planche et qui s'étendent vers le haut et longitudinalement à partir de celui-ci, les raccordements respectifs entre lesdites parties avant et médiane (11, 12) et entre les dites parties médiane et arrière (12, 13) comportant, situés dessus, des ponts pour pied (14, 15) pour la position des pieds de l'utilisateur, ces ponts pour pied étant inclinés vers le bas en direction de la partie médiane (12).

2. Planche selon la revendication 1, caractérisée en ce que chaque arrière à pointes (13a, 13b) de ladite partie arrière (13) a une configuration de pyramide trigonale conique.

3. Planche selon la revendication 2 dans laquelle le bord inférieur de chaque arrière à pointes (13a, 13b) comporte un aileron (19a, 19b) qui y est fixé.

4. Planche selon l'une quelconque des revendications précédentes, caractérisée en ce que lesdites plaques latérales (20, 21) comporte un moyen de fente (22, 23, 24, 25) formé dedans pour faciliter le libre pliage de ladite partie médiane (12).

5. Planche selon la revendication 4, caractérisée en ce que ledit moyen de fente (22, 23, 24, 25) comporte une fente (22, 23) formée dans chacune desdites plaques latérales (20, 21) de façon à s'étendre obliquement à partir du bord supérieur de cette plaque latérale (20, 21) jusqu'à être adjacente au bord inférieur de celle-ci et une autre fente (24, 25) formée de façon similaire à partir de l'extrémité inférieure de la dite fente (22, 23) dans la plaque latérale de façon à s'étendre le long du bord latéral correspondant de ladite partie médiane (12).

6. Planche selon l'une quelconque des revendications précédentes, caractérisée en ce que lesdits ponts pour pied (14, 15) comportent un moyen de fixation (50, 51) monté obliquement dessus.

7. Planche selon la revendication 6, caractérisée en ce que ledit moyen de fixation (50, 51) comprend une plaque maintenant la chaussure (53) sur laquelle des entailles (54, 55) ont été faites, un ruban de caoutchouc (57) dont les extrémités opposées sont fixées au pont pour pied correspondant (14, 15) étant passé à travers lesdites entailles (54, 55), et un tissue du genre gaine (56) possédant une ruban de caoutchouc (57) sur sa longueur ledit tissue du gentre gaine (56) possédant une longueur plus grande que celle dudit ruban de caoutchouc (57).

8. Planche selon l'une quelconque des revendications précédentes, caractérisée en ce qu'elle comporte de plus un moyen de ressort pour augmenter l'élasticité dans ladite partie médiane (12), ledit moyen de ressort étant situé à l'intérieur dudit corps de planche (10) de façon à s'étendre à partir de ladite partie avant (11) à travers ladite partie médiane (12) jusqu'à ladite partie arrière (13), ledit moyen de ressort comportant une poulie (34, 35), un fil métallique autour de ladite poulie (38, 39) et un ressort à boudin (40, 41) pour maintenir ledit fil métallique (38, 39) sous tension.

## Patentansprüche

1. Brett zum gleiten auf Schnee mit einem Brettkörper (10), der einen vorderen Endteil (11), einen mittleren Teil (12) und einen zweizinkigen hinteren Endteil besitzt, dadurch gekennzeichnet, daß sowohl der vordere als such der hintere Endteil (11, 13) eine solche Stärke hat, daß er sich unter dem Gewicht des Benutzers elastisch durchbiegt, daß der Brettkörper (10) abwärtsgewölbt und mit Seitenwangen (20, 21) versehen ist, die an beiden Seitenwänden des Brettkörpers montiert sind und sich von diesem aufwärts und in dessen Längsrichtung erstrecken, und daß der vorderen Endteil mit dem mittleren Teil (11, 12) und der mittleren Teil mit dem hinteren Endteil (12, 13) durch darauf angeordnete, zu dem mittleren Teil (12) hin abwärtsgeneigte Auftrittsflächen (14, 15) für den Benutzer verbunden sind.

2. Brett nach Anspruch 1, dadurch gekennzeichnet, daß jede Zinke (13a, 13b) des hinteren Endteils (13) die Form einer verjüngten dreiseitigen Pyramide hat.

3. Brett nach Anspruch 2, dadurch gekennzeichnet, daß am unteren Rand jeder Zinke (13a, 13b) eine Flosse (19a, 19b) verankert ist.

4. Brett nach einem der vorhergehenden Ansprüche, dadurch gekennzeichnet, daß in den Seitenplatten (20, 21) Schlitze (22, 23, 24, 25) ausgebildet sind, um das freie Durchbiegen des mittleren Teils (12) zu erleichtern.

5. Brett nach Anspruch 4, dadurch gekennzeichnet, daß zu den Schlitzen (22, 23, 24, 25) in den Seitenwangen (20, 21) jeweils ein Schlitz gehört, der sich vom oberen Rand der Seitenwange (20, 21) schräg bis in die Nähe des unteren Randes derselben erstreckt, sowie ein weiterer Schlitz (24, 25), der sich von dem unteren Ende des genannten Schlitzes (22, 23) längs des entsprechenden Seitenrandes des mittleren Teils (12) erstreckt.

6. Brett nach einem der vorhergehenden Ansprüche, dadurch gekennzeichnet, daß auf den Auftrittsflächen (14, 15) Bindungseinrichtungen (50, 51) schräg montiert sind.

7. Brett nach Anspruch 6 dadurch gekennzeichnet, daß die Bindungseinrichtung (50, 51) eine mit Langlöchern (54, 55) ausgebildete Schuhhalteplatte (53) besitzt, ferner ein die Langlöcher (54, 55) durchsetzendes Gummiband (58), dessen einander entgegengesetzte Enden an der entsprechenden Auftrittsfläche (14, 15) befestigt sind, und eine Stoffhülse (56), die das Gummiband (57) in seiner Länge abdeckt und länger ist als das Gummiband (57).

8. Brett nach einem der vorhergehenden Ansprüche, dadurch gekennzeichnet, daß eine Federeinrichtung vorgesehen ist, die dazu dient, die Elastizität des mittleren Teils (12) zu erhöhen, und die in dem Brettkörper (10) angeordnet sind und sich von dem vorderen Endteil (11) durch den mittleren Teil (12) hindurch zu dem hinteren Teil (13) erstrecken und eine Umlenkrolle umfassen, ferner einen um die Umlenkrolle herumgeführten Draht (38, 39) und eine Schraubenfeder (40, 41) zum Gespannthalten des Drahtes (38, 39).

第 3 図

第 4 図

5

6

0 031 382

2

7

8

0 031 382

0 031 382

Fig. 9

13a 15 51 40° 17 12 22 20 10 17 XI 59 14 50 40° XI 11 13b 13

Fig. 10

58 50(51) 53 55 54 58 52 57 56

Fig. 11

52 53 14 56